(19) Europäisches Patentamt
European Patent Office
Office européen des brevets

(11) **EP 4 513 711 A1**

(12) **EUROPEAN PATENT APPLICATION**

(43) Date of publication:
26.02.2025 Bulletin 2025/09

(21) Application number: 24195115.1

(22) Date of filing: 19.08.2024

(51) International Patent Classification (IPC):
*H02J 7/00* (2006.01)

(52) Cooperative Patent Classification (CPC):
H02J 7/0014; H02J 7/0047

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.08.2023 CN 202311054887

(71) Applicant: Shenzhen Hithium Energy Storage
Technology Co., Ltd.
Shenzhen, Guangdong 518110 (CN)

(72) Inventor: XU, Chu
Shenzhen, 518110 (CN)

(74) Representative: RGTH
Patentanwälte PartGmbB
Neuer Wall 10
20354 Hamburg (DE)

(54) **CHARGE BALANCING METHOD AND DEVICE, COMPUTER APPARATUS AND STORAGE MEDIUM**

(57) The disclosure relates to charge balancing method and apparatus, computer device, storage medium and computer program product. The method includes: obtaining multiple operating state determination events in a first time period; determining a target operating state determination event among the multiple operating state determination events; determining a balancing alignment point of a second time period according to an operating state indicated by the target operating state determination event, where the first time period belongs to a time period prior to the second time period; and executing a charge balancing strategy corresponding to the operating state based on a trigger situation of a balancing event corresponding to the balancing alignment point.

S202
Obtaining multiple operating state determination events in a first time period

S204
Determining a target operating state determination event among the multiple operating state determination events

S206
Determining the balancing alignment point of a second time period based on the operating state indicated by the target operating state determination event; the first time period belongs to the historical time period of the second time period

S208
Executing the charge balancing strategy corresponding to the operating state based on the trigger situation of the balancing event corresponding to the balancing alignment point

Fig. 2

**Description**

**TECHNICAL FIELD**

The present disclosure relates to the technical field of electrical energy storage, and in particular to charge balancing method, device, computer apparatus, storage medium and computer program product.

**BACKGROUND**

For a battery pack with multiple cells, there is a deviation in voltages of individual cells, which causes excessive charging and discharging of a certain cell. In related art, balancing methods for this situation comprise active balancing and passive balancing. The passive balancing has low cost and simple implementation, so it is widely used in electric vehicles, energy storage and other fields. The traditional passive balancing strategy defines the state of charge of the balancing alignment point as 100% to control the charge balance of the individual cells when the state of charge of the battery pack is 100%.

However, if the state of charge of the battery pack under the operating state is lower than the state of charge of the balancing alignment point for a long time, it will be difficult to accurately control the charge balance of individual cells, and over-balanced or under-balanced situations may easily occur.

**SUMMARY**

Based on this, it is necessary to provide a more accurate charge balancing method, apparatus, computer device, computer readable storage medium, and computer program product in response to the above technical problem.

According to a first aspect of the present disclosure, there is provided a charge balancing method. The method comprises:

obtaining multiple operating state determination events in a first time period;

determining a target operating state determination event among the multiple operating state determination events;

determining a balancing alignment point of a second time period according to an operating state indicated by the target operating state determination event, wherein the first time period belongs to a time period prior to the second time period; and

executing a charge balancing strategy corresponding to the operating state based on a trigger situation of a balancing event corresponding to the balancing alignment point.

In an embodiment, the multiple operating condition determination events comprise a small current full charge event, a low charge idle event and a plateau region constant current charging event for determining the operating condition; and obtaining the multiple operating condition determination events in the first time period comprises:

determining the small current full charge event that occurs in the first time period based on a charging current value and a cell state of charge that meet a full charge event condition; and/or,

determining the low charge idle event that occurs in the first time period based on a cell idle duration and a cell state of charge that meet a low charge idle event condition; and/or,

determining the plateau region constant current charging event that occurs in the first time period based on a relative change rate between a voltage and a cell charge, a stability of a charging current, and a charging current value that meet a plateau region constant current charging condition.

In an embodiment, determining the plateau region constant current charging event that occurs in the first time period based on the relative change rate between the voltage and the cell charge, the stability of the charging current, and the charging current value that meet the plateau region constant current charging condition comprises:

when the stability of the charging current meets a constant current condition and the charging current value meets a current threshold condition, determining the relative change rate between the voltage and the cell charge; and

when the relative change rate reaches a change rate critical value in the first time period, determining the plateau region constant current charging event that occurs in the first time period based on the change rate critical value.

In an embodiment, determining the balancing alignment point of the second time period according to the operating condition indicated by the target operating condition determination event comprises:

if the operating condition is a full charge condition indicated by the small current full charge event, determining the balancing alignment point to be a full value of the cell state of charge;

if the operating condition is a low charge idle condition indicated by the low charge idle event, determining the balancing alignment point to be an empty value of the cell state of charge; and

if the operating condition is a plateau region operating condition indicated by the plateau region constant current charging event, determining the balancing alignment point to be the relative change rate between the voltage and the cell charge, where the relative change rate reaches a change rate critical value in the first time period.

In an embodiment, determining the target operating condition determination event among the multiple operating condition determination events comprises:

determining trigger counts of the multiple operating condition determination events;

obtaining a first target operating condition determination event of which trigger count meets a number condition;

if one first target operating condition determination events is obtained, determining the first target operating condition determination event to be the target operating condition determination event among the multiple operating condition determination events; and

if multiple first target operating condition determination events are obtained, determining a second target operating condition determination event from the multiple first target operating condition determination events with same event trigger count according to priorities of the multiple operating condition determination events, where the second target operating condition determination event is the target operating condition determination event among the multiple operating condition determination events.

In an embodiment, executing the charge balancing strategy corresponding to the operating condition based on the trigger situation of the balancing event corresponding to the balancing alignment point comprises:

if the balancing event corresponding to the balancing alignment point is triggered, determining charge to be balanced for each cell according to a balancing charge calculation method under the operating condition;

determining time required for charge balancing of the charge to be balanced, where the time required for charge balancing is time for passive balancing current release; and

executing passive charge balancing according to the time required for charge balancing.

In an embodiment, the balancing event is a small current full charge event under a full charge condition, and the small current full charge event is triggered when a charging current value and cell charge meet a full charge condition; or, the balancing event is a low charge idle event under a low charge idle condition, and the low charge idle event is triggered when a cell idle duration and cell charge meet a low charge idle event condition;
determining the charge to be balanced for each cell according to the balancing charge calculation method under the operating condition comprises:

under the full charging condition or the low charge idle condition, obtaining state of charge of each cell and a minimum cell state of charge of a battery pack;

determining a difference in state of charge between the state of charge and the minimum cell state of charge;

if the difference in state of charge is not in a range of over-balanced state of charge, converting the difference in state of charge into the charge to be balanced for each cell through a minimum cell discharge capacity of the battery pack; and

if the difference in state of charge is in the range of over-balanced state of charge, there is no charge to be balanced for each cell.

In an embodiment, the balancing event is a plateau region constant current charging event under a plateau region operating condition, and the plateau region constant current charging event is triggered when a relative change rate between a voltage and cell charge, a stability of the charging current, and a charging current value meet a plateau region constant current charging condition;
determining the charge to be balanced for each cell according to the balancing charge calculation method under the operating condition comprises:

under the plateau region operating condition, determining battery pack charge when each cell meets the plateau region constant current charging condition, and a maximum battery pack charge when each cell meets the plateau region constant current charging condition;

determining a charge difference between the maximum battery pack charge and the battery pack charge;

if the charge difference is not in a range of over-balanced charge, the charge difference is the charge to be balanced for each cell; and

if the charge difference is in the range of over-balanced charge, there is no charge to be balanced for each cell.

In an embodiment, before executing the charge balancing strategy corresponding to the operating condition based on the trigger situation of the balancing event corresponding to the balancing alignment point, the method further comprises:
controlling a start/stop state of the charge balancing process according to hardware design information and a balancing duty cycle, where the start/stop state is a start state.

In an embodiment, after executing the charge balancing strategy corresponding to the operating condition, the method further comprises:

if time required for charge balancing is less than a duration in which the charge balancing process is in a start state each time, clearing the time required for charge balancing to stop executing a next round of steps of the charge balancing method, where the time required for charge balancing is obtained by executing the charge balancing strategy corresponding to the operating condition; and

if the operating condition does not belong to a plateau region operating condition, and a cell voltage of a battery pack and a minimum cell voltage are within a preset difference range, clearing the time required for charge balancing to stop executing the next round of steps of the charge balancing method.

In an embodiment, priorities of the small current full charge event, the low state of charge idle event and the plateau region constant current charging event decrease in order.

In an embodiment, start time and end time of the first time period is dynamically adjusted.

In an embodiment, a length of the first time period is determined based on data amount of the operating state determination events in the first time period.

According to a second aspect of the present disclosure, there is provided a charge balancing device. The device comprises:

an event acquisition module configured to acquire multiple operating state determination events in a first time period;

a target event determination module configured to determine a target operating state determination event among the multiple operating state determination events;

an alignment point determination module configured to determine a balancing alignment point of a second time period according to an operating state indicated by the target operating state determination event, wherein the first time period belongs to a time period prior to the second time period; and

a balancing execution module configured to execute a charge balancing strategy corresponding to the operating state based on a trigger situation of a balancing event corresponding to the balancing alignment point

According to a third aspect of the present disclosure, there is provided a computer device. The computer device comprises a memory and a processor. The memory stores a computer program. When the processor executes the computer program, steps of charge balancing in any of the above embodiments are performed.

According to a fourth aspect of the present disclosure, there is provided a non-transitory computer-readable storage medium with a computer program stored thereon. When the computer program is executed by a processor, steps of the charge balancing in any of the above embodiments are performed.

According to a fifth aspect of the present disclosure, there is provided a computer program product. When the computer program is executed by a processor, steps of the charge balancing in any of the above embodiments are performed.

According to the above-described charge balancing method, apparatus, computer device, storage medium, and computer program product, multiple operating condition determination events in a first time period are obtained, a target operating condition determination event among the multiple operating condition determination events is determined to realize a comprehensive consideration of multiple operating conditions in a first time period. The target operating condition determination event is determined, and a balancing alignment point in a second time period is determined in accordance with an operating condition indicated by the target operating condition determination event, and the first time period is a time period prior to the second time period. Therefore, the balancing alignment point can be adaptively adjusted in accordance with the target operating condition determination event, so that the balancing event corresponding to the balancing alignment point can be reached in the second time period. Therefore, based on the trigger situation of the balancing event corresponding to the balancing alignment point, a charge balancing strategy corresponding to the operating condition is executed to accurately adjust the charge for each cell, so as to make the charge of each cell more balanced

## BRIEF DESCRIPTION OF THE DRAWINGS

FIG. 1 is an application environment diagram of a charge balancing method in an embodiment;

FIG. 2 is a schematic flow chart of a charge balancing method in an embodiment;

FIG. 3 is a charging schematic diagram of a charge balancing method in an embodiment;

FIG. 4 is a change rate-charge amount relationship diagram of a charge balancing method in another embodiment;

FIG. 5 is a structural block diagram of a charge balancing device in an embodiment;

FIG. 6 is an internal structure diagram of a computer device in an embodiment.

## DETAILED DESCRIPTION

In order to make the purpose, technical solutions and advantages of the present disclosure clearer, the present disclosure will be further described in detail below with reference to the drawings and embodiments. It should be understood that the specific embodiments described here are only used to explain the present disclosure and are not used to limit the present disclosure.

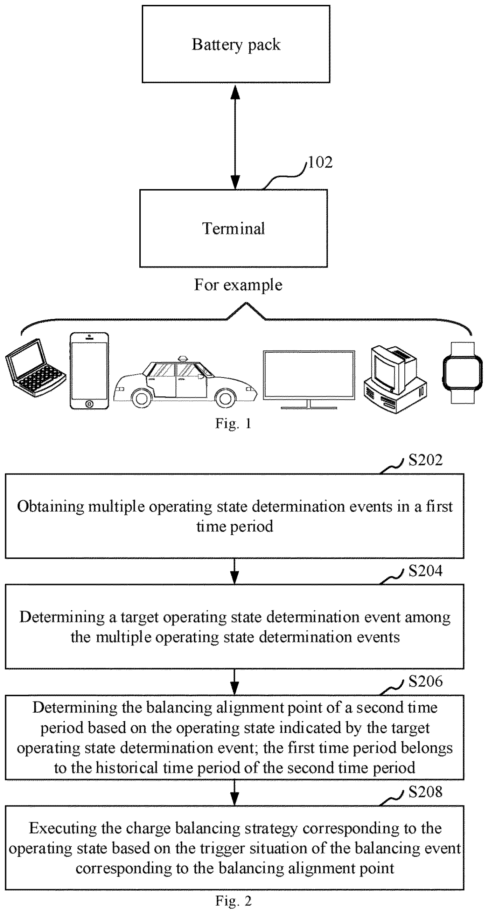

The charge balancing method provided by the embodiment of the present disclosure can be applied in the application environment as shown in FIG. 1. The terminal 102 is installed with a battery management system (BMS) for monitoring, controlling and protecting the battery pack. The terminal 102 can be, but is not limited to, a variety of personal computers, comprising the battery management system itself, laptops, smart phones, tablets, Internet of Things devices and portable wearable devices. The Internet of Things devices can be smart speakers, smart TVs, smart air conditioners, smart vehicle equipment, etc. The portable wearable devices can be smart watches, smart bracelets, head-mounted devices, etc.

In one embodiment, as shown in FIG. 2, a charge balancing method is provided. The method is explained by taking the method applied to the terminal 102 in FIG. 1 as an example, and comprises the following steps:

Step 202: obtaining multiple operating state determination events in a first time period.

The first time period is the time interval in which the operating state determination events are counted. The first time period may have a time length determined by a start time and an end time. The time length is preset, but the start time and the end time may be dynamically adjusted. Specifically, the length of the first time period is preset so that the data amount of the operating state determination events in the first time period is moderate, thereby reflecting the operating states during the operation of the first time period through multiple operating state determination events while occupying less resources. The start time point of the first time period is dynamically updated, so that the various operating state determination events in the first time period can more accurately reflect the actual operating states during the operation of the first time period, and the operating states can be adjusted more accurately and adaptively.

The operating state determination event is triggered during the operation of the battery pack and is configured to determine the operating state triggered by the battery pack. In some examples, the operating state determination event is triggered when the battery pack meets the event conditions and is configured to characterize a certain usage situation of the battery pack. Through a variety of operating state determination events, the usage situation of the battery pack can be comprehensively considered from multiple perspectives.

In one embodiment, obtaining multiple operating state determination events in the first time period comprises: detecting the battery pack according to the event conditions of various operating state determination events respectively; determining the operating state determination event triggered by the battery pack according to the event conditions that the battery pack meets; and counting the operating state determination events in the first time period according to the types of the operating state determination events, and obtaining multiple operating state determination events that occurred in the first time period. As a result, various operating state determination events that occur in the first time period are determined in real time, so as to more accurately obtain the operating state determination events that occur in the first time period. The operating state determination events in the first time period are counted according to the types of the operating state determination events, which is faster and has a weaker impact on accuracy.

The event condition for each operating state determination event is in one-to-one correspondence with each operating state determination event. Therefore, the event condition corresponds to each operating state determination event one-to-one, and the triggering situation of the operating state determination event can be accurately determined through the event condition.

In some examples, obtaining multiple operating state determination events in the first time period comprises: obtaining operating state determination events according to multiple types; when there is only one operating state determination event in the battery pack, obtaining one operating state determination event; when there are only two operating state determination events in the battery pack, obtaining two operating state determination events; when there are multiple operating state determination events in the battery pack, obtaining multiple operating state determination events.

Step 204: determining a target operating state determination event among the multiple operating state determination events.

The target operating state determination event is one of the multiple operating state determination events, which is compared and selected from the multiple operating state determination events. Different types of operating state determination events are configured to determine different operating states respectively. The operating state indicated by the target operating state determination event is the operating state configured to determine the balancing alignment point in the second time period. In some examples, the target operating state determination event can be determined by the trigger count of the multiple operating state determination events, or can be determined by the priority of the multiple operating state determination events, or can be determined by the trigger count and the priority of the multiple operating state determination events.

In one embodiment, determining the target operating state determination event among multiple operating state determination events comprises: separately counting the operating state determination events that occurred in the first time period and obtaining parameter information of various operating state determination events; determining the target operating state determination event according to the conditions met by the parameter information among various operating state determination events; where the parameter information comprises at least one of the trigger count and the priority of the operating state determination event.

Step 206: determining the balancing alignment point of a second time period based on the operating state indicated by the target operating state determination event. The first time period belongs to the time period prior to the second time period.

The operating state is configured to determine the balancing alignment point achieved during the charge balancing process in the second time period to make adaptive adjustments to the balancing alignment point. In some examples, multiple operating state determination events comprise, for indicating different operating states, a small current full charge event, a low state of charge idle event, and a plateau region constant current charging event. The target operating state determination event can be any one of a small current full charge event, a low state of charge idle event and a plateau region constant current charging event.

The balancing alignment point is a parameter implemented by executing the charge balancing strategy. This parameter is dynamically adjusted according to the operating state indicated by the target operating state determination event, so that the corresponding parameter of the battery pack can reach this balancing alignment point in the second time period. In some examples, if the target operating state determination event is a small current full charge event, then a certain balancing alignment point in the second time period is determined based on the operating state indicated by the small current full charge event. If the target operating state determination event is a low state of charge idle event, then another balancing alignment point in the second time period is determined based on the operating state indicated by the low state of charge idle event. If the target operating state determination event is a plateau region constant current charging event, then yet another balancing alignment point in the second time period is determined based on the operating state indicated by the plateau region constant current charging event.

The second time period is a time period in which the charge balancing strategy can be executed, and the time period prior to the second time period comprises the first time period. In some examples, the first time period and the second time period have the same time length, and the first time period is a time period before the second time period.

In some examples, the first time period is a time period before the second time period to make the operating states more time-sensitive, thereby more accurately determining the balancing alignment point applicable to the second time period. For example, the second time period is the time period of the current month, and the first time period is the month before the current month.

In one embodiment, determining the balancing alignment point for the second time period based on the operating state indicated by the target operating state determination event comprises: searching, from the candidate balancing alignment points, the balancing alignment point for the second time period based on the operating state indicated by the target operating state determination event. The operating state indicated by the target operating state determination event has an operating state identifier, and the operating state identifier can be compared with each candidate balancing alignment point to obtain a balancing alignment point consistent with the operating state identifier. The balancing alignment point consistent with the operating state identifier is the balancing alignment point for the second time period.

Step 208: executing the charge balancing strategy corresponding to the operating state based on the trigger situation of the balancing event corresponding to the balancing alignment point.

The balancing event is an event corresponding to the balancing alignment point. If the balancing event is triggered, the charge balancing strategy corresponding to the operating state is performed to balance the charge of individual cells. The goal of charge balancing of individual cells is that certain parameters of the individual cells reach the balancing alignment point.

The trigger situation of the balancing event is the satisfaction situation of the event condition of the balancing event. In some examples, when the battery pack meets the event condition of the balancing event, the charge balancing strategy corresponding to the operating state is performed so that the parameters of individual cells match the corresponding balancing alignment point, thereby achieving charge balancing of individual cells. When the battery pack does not meet the event condition of the balancing event, the charge balancing strategy corresponding to the operating state will not be performed.

In some examples, the balancing event and the target operating state determination event can be triggered based on the same event condition to reuse the event triggering condition of the target operating state determination event, thereby avoiding occupying too many resources due to data from multiple event conditions. The charge balancing strategy is set according to different operating states. There is a corresponding charge balancing strategy for each operating state, so that the parameters of individual cells are close to the balancing alignment point.

In the above charge balancing method, multiple operating state determination events in the first time period are obtained. The target operating state determination event in the multiple operating state determination events is determined to achieve comprehensive consideration of multiple operating states in the first time period. The target operating state determination event is determined, and the balancing alignment point for the second time period is determined based on the operating state indicated by the target operating state determination event, and the first time period is the time period prior to the second time period, thereby enabling the balancing alignment point can be adaptively adjusted according to the target operating state determination event, and the balancing event corresponding to the balancing alignment point can be achieved in the second time period. Therefore, based on the trigger situation of the balancing event corresponding to the balancing alignment point, the charge balancing strategy corresponding to the operating state is performed, so as to accurately adjust the charge of individual cells to make the charge of individual cells more balanced.

In one embodiment, the multiple operating state determination events comprise a small current full charge event, a low state of charge idle event and a plateau region constant current charging event for determining the operating state. Obtaining multiple operating states in the first time period comprises: determining the small current full charge event that occurs in the first time period based on the charging current value and the state of charge of the cell that meet the small current full charge event condition; and/or, determining the low state of charge idle event that occurred in the first time period based on the cell idle duration and the cell state of charge that meet the low state of charge idle event condition; and/or, determining the plateau region constant current charging event that occurs in the first time period based on the relative change rate between the voltage and cell charge, the stability of the charging current and the charging current value that meet the plateau region constant current charging condition.

The small current full charge event condition comprises full charge index required to be achieved by the charging current value and the cell state of charge. The charging current value is the degree of charging of the cell. The cell state of charge (SOC) refers to the current charging state of the battery cell, indicating the ratio between the usable electrical energy in the battery and the total capacity. The full charge index refers to the comparison result between the charging current value and the full charge current threshold, and the comparison result between the cell state of charge and the full cell state of charge threshold, both of which represent the full charge result.

Specifically, when the charging current value of the cell is less than the low current threshold and the cell state of charge is full, this comparison result represents the full charge result, and then it determines that a small current full charge event has occurred in the cell. When the charging current reaches the small current threshold, it indicates that the cell has less charge loss. The cell state of charge refers to the current charging status of the battery cell, indicating the ratio between the usable electrical energy in the battery and the total capacity. When the cell state of charge is full, it means that the cell is fully charged. Correspondingly, the small current full charge event is configured to indicate that the battery pack is in full charge state.

The low state of charge idle event condition comprises low state of charge idle index required to be achieved by the cell idle duration and the cell state of charge. The cell idle duration refers to the length of time the battery cell remains idle without charging or discharging activities, which can be configured to estimate the charge stability of the battery. The low state of charge idle index refers to the comparison results between the cell idle duration and the low state of charge duration threshold, and the comparison results between the cell state of charge and the low state of charge threshold, both of which are low state of charge idle results. In some examples, the low state of charge threshold is based on ambient temperature changes, so that the low state of charge idle index changes with the temperature, and the low state of charge idle event that occurs in the first time period can more accurately reflect the occurrence of low state of charge idle event in the battery cell.

Specifically, when the cell idle duration is greater than the cell idle threshold and the cell state of charge is less than 30%, the comparison result is a low state of charge idle result, and it is determined that a low state of charge idle event has occurred in the cell. If the cell idle duration is greater than the cell idle threshold, it means that the charge of the cell is in a relatively stable state. When the cell state of charge is less than 30%, it means that the cell is in a low state of charge idle state. Correspondingly, the low state of charge idle event is configured to indicate that the battery pack is in a low state of charge idle state.

The plateau region constant current charging condition comprise plateau region constant current index required to be achieved by the relative change rate between the voltage and the cell charge, the stability of the charging current, and the charging current value. The relative change rate between voltage and cell charge refers to the change rate at which the voltage affects the cell charge during the charging process of the cell. When the relative change rate meets a certain change rate condition, the battery pack can perform charge balancing strategy to align the charge of each cell in the battery pack. The charging current stability is configured to determine that the cell is in a relatively stable charging situation, and the charging current value is also configured to determine that the cell is in a relatively stable charging situation.

The small current full charging event, the low state of charge idle event and the plateau region constant current charging event can be sequentially characterized by the first event, the second event and the third event in order to improve the processing efficiency.

The operating states of the battery pack are determined through the small current full charging event, the low state of charge idle event and the plateau region constant current charging event to comprehensively consider the operating states in the first time period. Therefore, the balancing alignment point suitable for the second time period can be accurately determined, and the operating states suitable for charge balancing processing are determined to perform the charge balancing strategy corresponding to the operating states, so that the charge of each cell in the battery pack is balanced.

In one embodiment, determining the plateau region constant current charging event that occurs in the first time period based on the relative change rate between the voltage and cell charge, the stability of the charging current and the charging current value that meet the plateau region constant current charging condition comprises: when the stability of the charging current meets the constant current condition and the charging current value meets the current threshold condition, determining the relative change rate between the voltage and the cell charge; when the relative change rate is the critical value of the change rate in the first time period, determining the plateau region constant current charging event that occurs in the first time period based on the critical value of the change rate.

The constant current condition can be configured to determine whether the battery pack is in a stable state of constant current charging through the degree of current change. The current threshold condition can be configured to determine whether there is an abnormality in the charging process of the battery pack through the perspective of the current value. In some examples, the current threshold condition means that the charging current is less than a certain threshold, and the battery pack is once again determined to be in a plateau state of stable charging from the perspective of the current value.

The change rate critical value is a critical value that the change trend of the relative change rate changes, and is configured to indicate that the voltage of the battery pack is expected to reach another voltage stage or cutoff point in the charging process. In some examples, there are multiple change rate critical values in the first time period, and each change rate critical value is configured to represent that the charging process is expected to reach different voltage stages. For example: During a certain battery charging process, there is a critical value of change rate between the constant current charging stage (Constant Current, CC Stage) and the constant voltage charging stage (Constant Voltage, CV Stage).

Therefore, this embodiment does not need to determine the operating state based on the cell state of charge. Instead, the relative change rate between the voltage and the battery charge can be determined accurately by the charging current satisfying the constant current condition, and the charging current value satisfying the current threshold condition. When the relative change rate reaches a critical value of the change rate in the first time period, the operating states suitable for charge balancing can be determined in a more detailed manner based on the critical value of the change rate. For example, the voltage of the lithium iron phosphate battery pack is in the plateau region most of the time, and its cell state of charge is unknown. It is difficult to trigger a small current full charge event and a low state of charge idle event for charge balancing, but it can trigger the plateau region constant current charging event. The plateau region constant current charging event is configured as the target operating state determination event to perform steps 206 to 208 to achieve charge balance of the lithium iron phosphate battery pack.

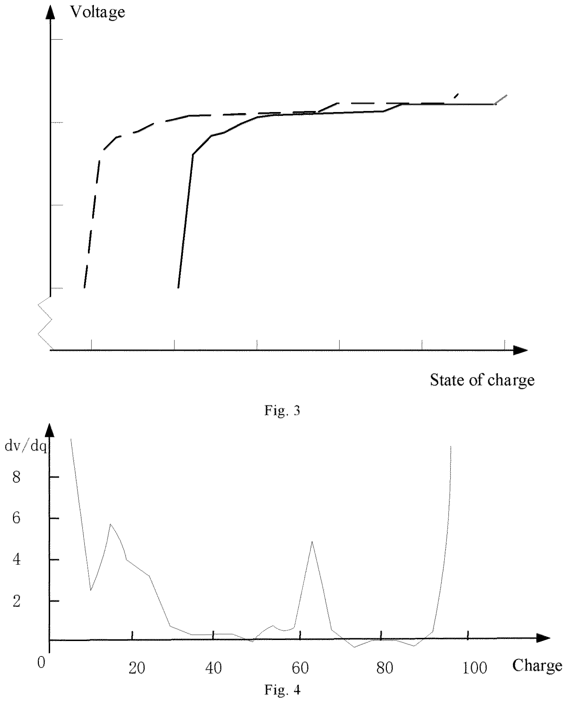

In one embodiment, as shown in FIG. 3, determining the balancing alignment point for the second time period based on the operating state indicated by the target operating state determination event comprises: if the operating state is a full charge state indicated by the small current full charge event, determining the balancing alignment point to be the full value of the cell state of charge; if the operating state is a low state of charge idle state indicated by the low state of charge idle event, determining the balancing alignment point to be the empty value of the cell state of charge; if the operating state is the plateau region operating state indicated by the plateau region constant current charging event, determining the balancing alignment point to be the relative change rate between the voltage and the cell charge, and the relative change rate reaches the critical value of the change rate in the first time period.

The operating state indicated by the target operating state determination event comprises one of the full charge state, the low state of charge idle state, and the plateau region operating state. Specifically, when the target operating state determination event is the small current full charge event, the operating state is the full charge state; when the target operating state determination event is the low state of charge idle event, the operating state is the low state of charge idle state; when the target operating state determination event is the plateau region constant current charging event, the operating state is the plateau region operating state. The full charge operating state is the operating state when the battery pack is about to be fully charged; the low state of charge idle state is the operating state when the battery pack is idle for a long time and the battery charge is low; the plateau region operating state is the operating state where the relative change rate between the voltage and charge of the battery pack reaches a certain change rate critical value during the battery pack is charging.

The respective event conditions of the small current full charge event and the low state of charge idle event involve the cell state of charge. The full charge state indicated by the small current full charge event represents that the cell state of charge reaches the full value, and the low state of charge idle state indicated by the low state of charge idle event represents the elapse of the cell state of charge until the empty value of the cell state of charge. Both the full value of the cell state of charge and the empty value of the cell state of charge can be determined accurately. Correspondingly, the balancing alignment point under the full charge state is the full value of the cell state of charge, and the balancing alignment point under the low state of charge idle state is the empty value of the cell state of charge.

The event condition of the plateau region constant current charging event involves the relative change rate between the voltage and the cell charge. When the relative change rate reaches the critical value of the change rate in the first time period, the plateau region constant current charging event of the battery pack is triggered. This relative change rate is configured to characterize the change rate between the point cloud and the electrical charge. Under the premise that the cell state of charge is neither a full value nor an empty value, this balancing alignment point can be determined more accurately through the critical value of the change rate in the first time period. In some examples, through the adjustment of the first time period, the balancing alignment point can be adaptively adjusted, so that the accuracy of the charge balance result is improved.

If the balancing alignment point is determined to be the full value of the cell state of charge, then the goal of executing the charge balancing strategy is to control the state of charge of each cell to eventually be the full value; if the balancing alignment point is determined to be the empty value of the cell state of charge, then the goal of executing the charge balancing strategy is to control the state of charge of each cell to eventually be empty value; if the balancing alignment point is determined to be the relative change rate between voltage and cell charge, and the relative change rate reaches the critical value of the change rate in the first time period, then the goal of executing the charge balancing strategy is to control the relative change rate to reach the critical value of the change rate.

Taking the charging process of two cells connected in series as an example, when the charge of cell A is 65Ah, the charge of cell B is 80Ah, and the critical value of the change rate at this time is 65Ah, then the charge to be balanced for the cell B is 15Ah, which is as shown in the peak of FIG. 4. The vertical coordinate of FIG. 4 is the derivative value of the voltage based on the charge.

In this embodiment, when the respective target operating state determination events respectively indicate different operating states, the balancing alignment point is adaptively adjusted. The balancing alignment point can not only be the value of the cell state of charge, but can also be determined based on the above-mentioned relative change rate reaching the change rate threshold, so as to accurately determine the balancing alignment point when the cell state of charge is not empty or full, thereby making the charge more balanced.

The priorities of the small current full charging event, the low state of charge idle event and the plateau region constant current charging event decreae in order.

In an embodiment, determining the target operating state determination event among multiple operating state determination events comprises: when the priority usage condition is met, according to the priorities of the small current full charge event, the low state of charge idle event and the plateau region constant current charging event, determining the target operating state determination event from the small current full charging event, the low state of charge idle event and the plateau region constant current charging event.

Specifically, from a macro perspective of using the battery pack, when the balancing alignment point of the battery pack is 100% SOC, the energy that can be released is the largest and the charge balance effect is the best. Therefore, the small current full charge event has the highest priority, and it belongs to "charging up-balancing" situation. When the balancing capacity of "charging up-balancing" cannot be calculated, the accuracy of the balancing alignment point determined by "low state of charge idle" is higher than that of "plateau region constant current charging", so the priority of the low state of charge idle event is higher than that of the plateau region constant current charging event.

Therefore, when multiple operating state determination events comprise a small current full charge event, a low state of charge idle event and a plateau region constant current charging event for operating state determination, the priorities of the three operating state determination events, namely, the small current full charge event, the low state of charge idle event and the plateau region constant current charging event decrease in order, so that the target operating state determination event can be determined from multiple operating state determination events based on the priorities.

In one embodiment, determining the target operating state determination event among the multiple operating state determination events comprises: determining the trigger count of the multiple operating state determination events; if a first target operating state determination event is obtained, the first target operating state determination event is the target operating state determination event among the multiple operating state determination events; if multiple first target operating state determination events are obtained, determining a second target operating state determination event among the multiple first target operating state determination events with the same trigger count according to the priorities of the multiple operating state determination events. The second target operating state determination event is the target operating state determination event among the multiple operating state determination events.

The first target operating state determination event is at least one operating state determination event of which trigger count meets the count condition. The operating state represented by the first target operating state determination event has a higher probability of occurrence. The balancing alignment point is determined based on this operating state so that the balancing alignment point is easier to reach, and the charge balancing strategy is easier to be performed, thereby ensuring that charge balancing is more likely to be performed. When there is only one first target operating state determination event, the first target operating state determination event is the target operating state determination event among the multiple operating state determination events.

The second target operating state determination event is one of the multiple first target operating state determination events. Since the second target operating state determination event is determined based on the priorities of multiple operating state determination events, it is possible to achieve good charge balancing effects and high accuracy of the balancing alignment point.

In one embodiment, obtaining the first target operating state determination event of which trigger count meets the count condition comprises: searching for a certain operating state determination event with the largest trigger count based on the trigger counts of various operating state determination events; and determining the operating state determination event with the largest trigger count as the first target operating state determination event.

In a specific implementation, determining the target operating state determination event among multiple operating state determination events comprises: if one operating state determination event among the small current full charge event, the low state of charge idle event, and the plateau region constant current charging event is the first target event with the largest trigger count, determining the operating state indicated by the first target event as the operating state for the first time period; if two operating state determination events among the small current full charge event, the low state of charge idle event and the plateau region constant current charging event have the same trigger count, and both are greater than the trigger count of the other operating state determination event, at this time, there are two first target operating state determination events, then determining the second target event among the two first target operating state determination events based on the priorities of the two operating state determination events, and determining the operating state indicated by the second target event as the operating state for the first time period.

The operating state indicated by the small current full charge event has the largest amount of energy released by the charge balancing strategy and the best charge balancing effect. Therefore, the small current full charge event has the highest priority. The operating state indicated by the low state of charge idle event has a higher accuracy of the balancing alignment point accuracy, so the low state of charge idle event has a higher priority than the plateau region constant current charging event.

In one embodiment, based on the trigger situation of the balancing event corresponding to the balancing alignment point, executing the charge balancing strategy corresponding to the operating state comprises: if the balancing event corresponding to the balancing alignment point is triggered, then determining the charge to be balanced for each cell based on the calculation method of balanced charge under the operating state; determining the time required for charge balancing of the charge to be balanced; the time required for charge balancing is the time for current discharging through the passive balancing; and executing passive charge balancing according to the time required for charge balancing.

The individual cells are cells that perform charge balancing in the battery pack. In some examples, there are N cells in a certain battery pack, and the N cells can be used as individual cells, so that the charge of the individual cells in the entire battery pack is balanced; where N is a positive integer.

The charge to be balanced is the energy that each cell needs to discharge under the operating state indicated by the target operating state determination event. The charge to be balanced is calculated through the balanced charge calculation method under the operating state. In some examples, the balanced charge calculation methods for some operating states are the same, and the balanced charge calculation methods for some operating states are different.

The time required for charge balancing is the time for each cell to discharge current through passive balancing. The passive balancing current may be a static parameter preset based on the design information of the battery pack, or it may be a dynamic parameter adjusted based on the design information of the battery pack.

In an embodiment, determining the charge to be balanced of each cell according to the calculation method of balanced charge under the operating state comprises: when the battery pack triggers a certain balancing event under each operating state, determining the charge to be balanced for each cell according to the calculation method of balanced charge under this operating state.

In an embodiment, determining the time required for charge balancing of the charge to be balanced comprises: calculating the ratio between the charge to be balanced and the passive balancing current, and obtaining the time required for charge balancing.

In an embodiment, executing passive charge balancing according to the time required for charge balancing comprises: executing passive charge balancing for the time required for charge balancing; the passive charge balancing is a processing method of releasing the charge to be balanced through heat or other means. For example, when the time required for executing charge balancing is 1s, passive charge balancing is performed for 1s.

Therefore, when the balancing event corresponding to the balancing alignment point is triggered, the balanced charge calculation method is adaptively determined according to the operating state, and the charge to be balanced is accurately calculated through the balanced charge calculation method, and the charge to be balanced can be released through the passive charge balancing and has low implementation cost.

In some examples, the balancing event is a small current full charge event under full charge state, and the small current full charge event is triggered when the charging current value and the cell state of charge meet the small current full charge event condition; or the balancing event is a low state of charge idle event under the low state of charge idle state. The low state of charge idle event is triggered when the cell idle duration and the cell state of charge meet the low state of charge idle event condition.

Therefore, different trigger events are set respectively for the full charge state and the low state of charge idle state, so that the battery pack can trigger the balancing event, and even trigger the balancing event multiple times to make the charge of the battery pack more balanced.

Specifically, when the small current full charge event is the target operating state determination event, the small current full charge event indicates the full charge state, indicating that there is at least a small current full charge event in the first time period, so the use of the small current full charge event as the balancing event is a prediction of the situation where a small current full charge event can be triggered in the second time period. If the target operating state determination event is determined to be the small current full charge event based on the trigger count, then it is predicted that the small current full charge event is often triggered in the second time period, so that the frequency of the charge balancing in the second time period can be increased and the charge of each cell can be accurately balanced.

Specifically, when the low state of charge idle event is the target operating state determination event, the low state of charge idle event indicates the low state of charge idle state, indicating that there is at least a low state of charge idle event in the first time period, so the use of the low state of charge idle event as the balancing event is a prediction of the situation where a low state of charge idle event can be triggered in the second time period. If the target operating state determination event is determined to be a low state of charge idle event based on the trigger count, then it is predicted that the low state of charge idle event is often triggered in the second time period, so that the frequency of the charge balancing in the second time period can be increased and the charge of each cell can be accurately balanced.

In one embodiment, determining the charge to be balanced of each cell based on the balanced charge calculation method under operating state comprises: obtaining the state of charge of each cell and the minimum value of state of charge of the cells in the battery pack under the full charge state or the low state of charge idle state; determining difference in the state of charge between the state of charge and the minimum value of state of charge of the cells; if difference in the state of charge is not in the range of over-balanced state of charge, converting the difference in the state of charge into the charge to be balanced for each cell through the cell minimum discharge capacity of the battery pack; if the difference in the state of charge is in the range of the over-balanced state of charge, there is no charge to be balanced for each cell.

The state of charge is the expected state of charge at the time of charge balancing. The minimum value of state of charge of the cells is a state of charge of a certain cell in the battery pack, and the state of charge of this cell is the smallest. For example: If the battery pack contains cell A, cell B and cell C, and the states of charge of cell A, cell B and cell C are from small to large, then the state of charge of cell A is the minimum value of state of charge of the cells.

The range of the over-balanced state of charge is a range designed for the state of charge under the full charge state or the low state of charge idle state. The range of the over-balanced state of charge comprises at least one boundary value to avoid over-balancing caused by the accuracy of the state of charge, the minimum value of state of charge of the cells, and the difference in the state of charge.

The cell minimum discharge capacity of the battery pack is the smallest discharge capacity among the discharge capacities of individual cells; it refers to the capacity of the cell that is allowed to be completely discharged, and is configured to characterize the minimum charge that can be provided in a complete discharge process. The minimum value of state of charge of the cells and the cell minimum discharge capacity are both applied under the full charge state or the low state of charge idle state, because these two operating states are set based on the short board effect of the cell, making individual cells are all balanced in charge.

The absence of charge to be balanced for each cell means that there is an amount of non-discharged cells that do not need to be discharged, and the amount of non-discharged cells refers to the cells that have reached charge balance.

In some examples, the method also comprises: determining whether the difference in the state of charge is in the range of the over-balanced state of charge. This step specifically comprises: determining whether the difference in state of charge is less than a boundary value of the range of the over-balanced state of charge; if it is less than the boundary value, it is in the range of the over-balanced state of charge; if it is greater than the boundary value, it is not in the range of the over-balanced state of charge.

In an embodiment, obtaining the state of charge of each cell and the minimum value of state of charge of the cells in the battery pack comprises: under the low state of charge idle state, determining state of charge of each cell of the battery pack according to the mapping relationship between voltage and state of charge. The minimum value of states of charge is determined as the minimum value of state of charge of the cells from the state of charge value of each cell; where, each cell of the battery pack is regarded as each cell respectively. As a result, under the low state of charge idle state, the state of charge and the minimum value of state of charge of the cells can be obtained more accurately. In some examples, the mapping relationship between voltage and state of charge is determined through a mapping relationship table between state of charge and voltage (State of Charge - Open Circuit Voltage, SOC-OCV).

In another embodiment, obtaining the state of charge of each cell and the minimum value of state of charge of the cells in the battery pack comprises: obtaining an estimated value of state of charge for each cell of the battery pack under the full charge state; and determining the minimum estimated value of the state of charge from the estimated values of the states of charge of individual cells, as the minimum value of state of charge of the cells; where individual cells of the battery pack are regarded as individual cells. Therefore, considering that the mapping relationship table and other methods are not suitable for the full charge state, a special module is set up for calculation to obtain the estimated value of the state of charge, so that the state of charge and the minimum value of state of charge of the cells in the battery pack are more precise.

In an embodiment, converting the difference in the state of charge into the charge to be balanced for each cell through the cell minimum discharge capacity of the battery pack comprises: calculating the ratio between the difference in the state of charge and the cell minimum discharge capacity of the battery pack. The ratio is the charge to be balanced of each cell.

Each cell has its own current state of charge, so as to determine the difference in the state of charge respectively, and to determine the charge to be balanced of each battery cell respectively. When the minimum value of state of charge of the cells is the current state of charge A1 of cell A, if the difference in the state of charge Y1 between the current state of charge X1 of the first cell and the current state of charge A1 is in the range of the over-balanced state of charge, then there is no charge to be balanced for the first cell. If the difference in the state of charge Y2 between the current state of charge X2 of the second cell and the current state of charge A1 of the cell is not in the range of the over-balanced state of charge, then the difference in the state of charge Y2 is converted into the charge to be balanced of each cell through the cell minimum discharge capacity C of the battery pack.

Based on this, under the full charge state or the low state of charge idle state, the state of charge is configured as a parameter to trigger the balancing event. Also, the charge to be balanced for each cell is determined accurately based on the current state of charge and the minimum value of state of charge of the cells to match the cell minimum discharge capacity with less data. It is determined that whether the charge to be balanced will cause over-balancing based on the range of the over-balanced state of charge, thus avoiding over-balanced charge in each cell and making the balancing effect more accurate.

In another embodiment, the balancing event is a plateau region constant current charging event under the plateau region operating state. The plateau region constant current charging event is triggered when the relative change rate between the voltage and the cell state of charge, the stability of the charging current, and the charging current value meet the plateau region constant current charging condition. A special trigger event is set respectively for the plateau region operating state, so that the battery pack can trigger the balancing event, and even trigger the balancing event multiple times to make the charge of the battery pack more balanced. Specifically, when the plateau region constant current charging event is the target operating state determination event, the plateau region constant current charging event indicates the plateau region operating state, and indicates that there is at least a plateau region constant current charging event in the first time period. Therefore, the use of the plateau region constant current charging event as a balancing event is a prediction of the situation where the plateau region constant current charging event can be triggered in the second time period. If the target operating state determination event is determined to be a plateau region constant current charging event based on the trigger count, then it is predicted that the plateau region constant current charging event is often triggered in the second time period, so that the frequency of the charge balancing in the second time period can be increased and the charge of each cell can be accurately balanced.

Correspondingly, determining the charge to be balanced for each cell according to the balanced charge calculation method under operating state comprises: under the plateau region operating state, determining the battery pack charge when the individual cells meet the plateau region constant current charging condition, and the maximum battery pack charge when the individual cells meet the plateau region constant current charging condition; determining the charge difference between the maximum battery pack charge and the battery pack charge; if the charge difference is not in the range of the over-balanced charge, the charge difference is the charge to be balanced for each cell; if the charge difference is in the range of the over-balanced charge, there is no charge to be balanced for each cell.

The battery pack charge is the accumulated charge of the battery pack when each cell is detected to meet the plateau region constant current charging condition. In some examples, when a certain battery cell meets the plateau region constant current charging condition, the battery pack charge of the cell is obtained; when the next cell of this cell meets the plateau region constant current charging condition, the battery pack charge of the next cell is obtained.

The maximum battery pack charge is the maximum accumulated charge of the battery pack when each cell meets the plateau region constant current charging condition. In some examples, when a certain cell meets the plateau region constant current charging condition, the battery pack charge is obtained once; when the next cell of this cell meets the plateau region constant current charging condition, the battery pack charge is obtained again, until the last cell meets the plateau region constant current charging condition, and the last battery pack charge of this round of charge balancing strategy is obtained; then the maximum value is determined from the battery pack charge obtained each time, and the maximum battery pack charge is obtained.

The range of the over-balanced charge is the range designed for the battery pack charge under the plateau region operating state. The range of the over-balanced charge comprises at least one boundary value to avoid over-balancing due to accuracy issues with the critical value of the change rate. In some examples, the critical value of the range of the over-balanced charge is dynamically adjusted based on the cell minimum discharge capacity in different battery packs.

In some examples, the method further comprises: a step of determining the critical value of range of the over-balanced charge. The determining step comprises: obtaining the boundary value of the range of the over-balanced state of charge; adjusting the boundary value according to the cell minimum discharge capacity and obtaining the critical value of the range of the over-balanced charge. In some examples, the product of the cell minimum discharge capacity and the boundary value of the range of the over-balanced state of charge is the critical value of the range of the over-balanced charge.

In an embodiment, the method further comprises a step of determining whether the charge difference is in the range of the over-balanced charge. The determining step comprises: determining whether the charge difference is greater than the critical value of the range of the over-balanced charge; if it is greater than or equal to the critical value, then the charge difference is not in the range of the over-balanced charge; if it is less than the critical value, the charge difference is in the range of the over-balanced charge.

In some examples, the batteries of the battery pack are connected in series, so that the batteries of the battery pack have the same current and can release charge.

Therefore, under the plateau region operating state, the charge to be balanced can be determined more accurately based on the battery pack charge and the maximum charge of the battery pack. It can be determined whether the charge to be balanced will cause over-balancing based on the range of the over-balanced charge, thereby avoiding over-balancing of the charge of each cell and making the balancing effect more accurate.

In a specific embodiment, the calculation method of the charge to be balanced under the full charge state, the low state of charge idle state and the plateau region operating state are respectively explained.

Under the full charge state, after estimating the state of charge of the n-th battery cell, the expression used to determine that the n-th cell has charge to be balanced is:

$$SOC_n - SOC_{min} < 1.5\%$$

Correspondingly, the charge to be balanced of the n-th cell is:

$$Q_{bal,n} = (SOC_n - SOC_{min}) \times Cap_{dis,min}$$

Under the full charge state, the expression used to determine that the n-th cell does not have any charge to be balanced is:

$$SOC_n - SOC_{min} \geq 1.5\%$$

Correspondingly, the charge to be balanced of the n-th battery cell is:

$$Q_{bal,n} = 0$$

In the low state of charge idle state, by querying the idle SOC-OCV table, and obtaining the state of charge of the n-th cell from the idle cell voltage, the expression used to determine that the n-th cell has charge to be balanced is:

$$SOC_n - SOC_{min} < 1.5\%$$

Correspondingly, the charge to be balanced of the n-th cell is:

$$Q_{bal,n} = (SOC_n - SOC_{min}) \times Cap_{dis,min}$$

Under the low state of charge idle state, the expression used to determine that the n-th cell does not have charge to be balanced is:

$$SOC_n - SOC_{min} \geq 1.5\%$$

Correspondingly, the charge to be balanced of the n-th battery cell is:

$$Q_{bal,n} = 0$$

$SOC_{min}$ is the minimum value of state of charge of the cells; $SOC_n$ is the state of charge of the n-th cell; $Q_{bal,n}$ is the charge to be balanced of the n-th cell;

$Cap_{dis,min}$ is the cell minimum discharge capacity of the battery pack.

Under the plateau region operating state, during the charging process, the voltage of each cell is detected to see whether it passes through the characteristic point. When passing through the characteristic point, the total charge of the current system is recorded, and the accumulated charge capacity of the system when the n-th cell passes through the characteristic point is obtained. At this time, the expression used to determine that the n-th cell has charge to be balanced is:

$$Q_{acc,ch,max} - Q_{acc,ch,n} \geq 1.5\% \times Cap_{dis,min}$$

Correspondingly, the charge to be balanced for the n-th battery cell is:

$$Q_{bal,n} = Q_{acc,ch,max} - Q_{acc,ch,n}$$

Under the plateau region operating state, the expression used to determine that the n-th cell does not have charge to be balanced is:

$$Q_{acc,ch,max} - Q_{acc,ch,n} < 1.5\% \times Cap_{dis,min}$$

Correspondingly, the expression of the charge that needs to be balanced for the n-th cell is:

$$Q_{bal,n} = 0$$

$Q_{acc,ch,n}$ is the accumulated battery pack charge when the n-th cell passes through the characteristic point, $Q_{acc,ch,max}$ is the maximum battery pack charge when each cell meets the plateau region constant current charging condition, $Q_{bal,n}$ is the charge to be balanced of the n-th cell; $Cap_{dis,min}$ is the cell minimum discharge capacity of the battery pack.

In one embodiment, the expression of the balancing time required for each cell is:

$$T_{bal,n} = Q_{bal,n}/I_{bal}$$

$T_{bal,n}$ is the time required for charge balancing, $Q_{bal,n}$ is the charge to be balanced of the n-th cell, and $I_{bal}$ is the passive balancing current.

In one embodiment, before executing the charge balancing strategy corresponding to the operating state based on the trigger situation of the balancing event corresponding to the balancing alignment point, the method comprises: controlling the start/stop state of the charge balancing process according to the hardware design information and balancing duty cycle; where the start/stop state is the start state.

Hardware design information comprises hardware information of the battery pack. The hardware information of the battery pack comprises maximum charging voltage, charging current, and other charge performance information. For example, some hardware designs prevent two consecutive cells from being turned on at the same time, and the balancing circuit is turned on for 1 minute each time. In this case, when passive balancing is performed, odd-numbered cells will be balanced for 1 minute, and even-numbered cells will be balanced for 1 minute, which are performed in a loop.

The balancing duty cycle is configured to determine the time period that can be used to perform the charge balancing method, and the time period that cannot be used to perform the charge balancing method. For example, the total balancing time of each cell in the second time period is determined based on the balancing duty cycle, and whether to perform steps 202-208 and corresponding embodiments is determined within the total balancing time.

The start/stop state comprise a start state and a stop state. In the start state, each cell can perform the charge balancing strategy; while in the stop state, each cell cannot perform the charge balancing strategy. In one embodiment, controlling the start/stop state of the charge balance processing comprises: controlling the start/stop state of the charge balance processing circuit.

Therefore, combining the hardware design information and the balancing duty cycle, it is determined, from the perspective of the battery pack, whether to perform the charge balancing strategy. The charge balancing method is only performed when the charge balancing is in a start state to ensure energy efficiency and avoid system overload or failure.

In one embodiment, after executing the charge balancing strategy corresponding to the operating state, the method further comprises steps of: if the time required for charge balancing is less than the duration in which the charge balancing process is in the start state each time, clearing the time required for charge balancing, so as to stop executing the next round of charge balancing method, where the time required for charge balancing is obtained by executing the charge balancing strategy corresponding to the operating state; if the operating state does not belong to the plateau region operating state, and a difference between the cell voltage of the battery pack and the minimum cell voltage is within a preset difference range, clearing the time required for charge balancing so as to stop executing the next round of charge balancing method.

If the time required for charge balancing is less than the duration in which the charge balancing process is in the start state each time, the time required for charge balancing is cleared to prevent the continued execution of the charge balancing method from affecting the normal operation of the battery pack; if the operating state does not belong to the plateau region operating state, and a difference between the cell voltage of the battery pack and the minimum cell voltage is within the preset difference range, the time required for cell balancing is cleared to avoid resource waste caused by over-balancing in the next round of charge balancing method. For example, it is determined that cell i can only be balanced for 10.5 minutes and time required for charge balancing each time is 1 minute based on the hardware design information and balancing duty cycle. When 0.5 minutes are left, it is not enough time for the next round of balancing circuit to open, and it is cleared to 0.

In one embodiment, this solution can adaptively adjust the passive balancing strategy of charge. It can identify battery operating state within a specific time range online, set a balancing target based on the identified operating state, and perform the balancing strategy.

In one embodiment, a small current full charge event, a low state of charge idle event and a plateau region constant current charging event are defined, and the operating state and triggering logic determined by each event are determined: the small current full charge event, the low state of charge idle event and the plateau region constant current charging event are numbered as event 1, event 2, and event 3 sequentially, as shown in Table 1.

Table 1

| Event number | Event name | Determining logic |
|---|---|---|
| Event 1 | Small current full charge event | Maximum SOC of the cell reaches 100% and the charging current at full charge is less than the threshold requirement |
| Event 2 | Low SOC idle | Maximum SOC of the cell is below 30% and the idle duration can meet the threshold requirements for different temperatures |
| Event 3 | Plateau region constant current charging | Current is stable in the charging process and the current is less than the threshold requirement and passes through the characteristic point between the voltage stages (i.e., the characteristic peak of the dV/dQ curve) |

In an embodiment, at step 202, obtaining multiple operating state determination events in the first time period comprises: counting the cumulative number of triggers of the above events within one month of the determination time, and when the month is over, resetting the accumulated number of triggers of the events to zero, resetting the timer for one month and counting the number of times.

Correspondingly, at step 204, determining the target operating state determination event among multiple operating state determination events comprises: when the detection time reaches one month, determining the operating state of the battery system based on the cumulative number of event triggered; if there is the same number of events counted, then determining based on the priorities of event 1, event 2 and event 3. The priorities of event 1, event 2 and event 3 will decrease in sequence. Specifically, if event 1 is triggered the most times, it is a full charge operating state; if event 2 is triggered the most times, it is a low SOC idle condition; if event 3 is triggered the most times, it is a plateau region operating state. In addition, the first month of initial operation of the system defaults to low SOC idle condition. The operating state of this determination is determined and recorded. The operating state of this determination is the operating state indicated by the target operating state determination event.

Step 206: determining the balancing alignment point for the second time period based on the operating state indicated by the target operating state determination event, comprising: setting the passive balancing target SOC for this month based on the operating state of the previous month. Specifically, if it is a fully charged operating state, the balancing target is 100% SOC; if it is a low SOC idle operating state, the balancing target is 0% SOC; if it is a plateau region operating state, the balancing target is the characteristics point between the plateau regions. This characteristic point determines the balancing alignment point as the relative change rate between voltage and cell charge, and the relative change rate reaches the critical value of the change rate in the first time period, which is the characteristic peak of the dV/dQ curve.

Step 208: executing the charge balancing strategy corresponding to the operating state based on the trigger situation of the balancing event corresponding to the balancing alignment point, comprising: when the balancing event corresponding to the balancing alignment point is triggered, calculating the charge to be balanced for each cell, and calculating the time required for charge balancing of each cell according to the charge to be balanced and passive balancing current, and executing passive charge balancing based on the time required for charge balancing.

In some examples, the method comprises: controlling the start/stop state of the passive balancing circuit of each cell according to the balancing duty cycle set by the hardware design information; when the passive balancing circuit is in the start state, executing steps 202 to 208 to update the time required for charge balancing; and the time required for charge balancing is deleted when any of the following conditions is met: the time required for charge balancing is less than the duration of the balancing start state each time; during the non-plateau period, the difference between the cell voltage and the minimum value of the cell voltage is within 5 millivolts (mV).

Based on this, by the above solution, the battery operating state within a specific time range is identified online, and based on the identified operating state, the balancing strategy is adaptively adjusted according to the battery operating state, and the accuracy of the balanced charge calculation is improved. In the battery management system, other strategies can also be considered to be adaptively adjusted according to the operating state. If the impact of temperature on the strategy is considered, the dimensions of temperature and temperature difference need to be added to the determination conditions. Types of events and operating states comprise but are not limited to the above descriptions, and can be adjusted or increased or decreased according to the actual situation. In addition, the battery operating state within a specific time range can be identified online. This operating state information can reflect the system usage status and can also provide effective information for the algorithms and strategies of the battery management system.

It should be understood that although the steps in the flowcharts involved in the above-mentioned embodiments are shown in sequence as indicated by the arrows, these steps are not necessarily executed in the order indicated by the arrows. Unless otherwise specified in this article, there is no strict order restriction on the execution of these steps, and these steps can be executed in other orders. Moreover, at least some of the steps in the flowcharts involved in the above embodiments may comprise multiple steps or stages. These steps or stages are not necessarily executed at the same time, but may be completed at different times. The execution order of these steps or stages is not necessarily sequential, but may be performed in turn or alternately with other steps or at least part of the steps or stages in other steps.

Based on the same inventive concept, embodiments of the present disclosure also provide a charge balancing device for implementing the above-mentioned charge balancing method. The solution to the problem provided by this device is similar to the solution recorded in the above method. Therefore, for the specific limitations in one or more embodiments of the charge balancing device provided below, please refer to the limitations on the charge balancing method mentioned above. The details are not repeated here.

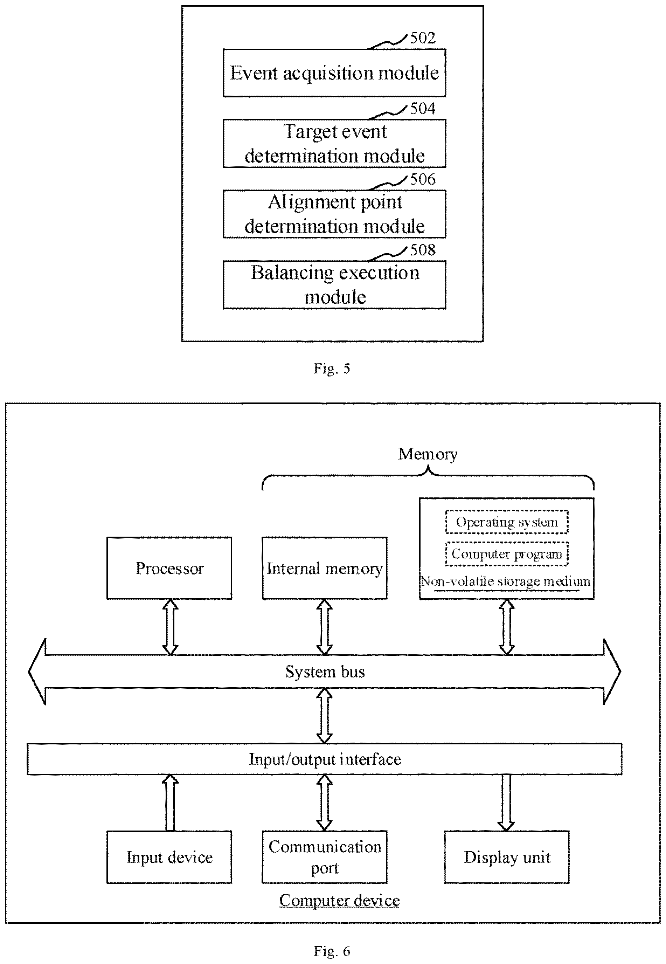

In one embodiment, as shown in FIG. 5, a charge balancing device is provided, comprising:

an event acquisition module 502 configured to acquire multiple operating state determination events in a first time period;

a target event determination module 504 configured to determine a target operating state determination event among the multiple operating state determination events;

an alignment point determination module 506 configured to determine a balancing alignment point for a second time period according to an operating state indicated by the target operating state determination event; the first time period belongs to a time period prior to the second time period; and

a balancing execution module 508 configured to execute the charge balancing strategy corresponding to the operating state based on the triggering situation of the balancing event corresponding to the balancing alignment point.

In one embodiment, the multiple operating state determination events comprise a small current full charging event, a low state of charge idle event and a plateau region constant current charging event for determining operating state. The event acquisition module 502 is configured to:

determine the small current full charge event that occurs in the first time period based on the charging current value and the cell state of charge that meet the small current full charge event condition; and/or,

determine the low state of charge idle event that occurs in the first time period based on the cell idle duration and the cell state of charge that satisfy the low state of charge idle event condition; and/or,

determine the plateau region constant current charging event that occurs in the first time period based on the relative change rate between the voltage and the cell charge, the stability of the charging current, and the charging current value that meet the plateau region constant current charging condition.

In one embodiment, the event acquisition module 502 is configured to:

determine the relative change rate between the voltage and the cell charge when the charging current meets the constant current condition and the charging current value meets the current threshold condition; and

determine the plateau region constant current charging event occurs in the first time period based on a critical value of the change rate when the relative change rate reaches the critical value of the change rate in the first time period.

In one embodiment, the alignment point determination module 506 is configured to:

if the operating state is the full charge state indicated by the small current full charge event, determine the balancing alignment point to be the full value of the cell state of charge;

if the operating state is the low state of charge idle state indicated by the low state of charge idle event, determine the balancing alignment point to be the empty value of the cell state of charge; and

if the operating state is the plateau region operating state indicated by the plateau region constant current charging event, determine the balancing alignment point to be the relative change rate between the voltage and the cell charge, and the relative change rate reaches the critical value of the change rate in the first time period.

In one embodiment, the target event determination module 504 is configured to:

determine trigger counts of the multiple operating state determination events;

obtain a first target operating state determination event of which trigger count meets the number condition;

if one first target operating state determination event is obtained, determine the first target operating state determination event is the target operating state determination event among the multiple operating state determination events; and

if multiple first target operating state determination events are obtained, determine a second target operating state determination event from the multiple first target operating state determination events with the same trigger count according to the priorities of the multiple operating state determination events, where the second target operating state determination event is the target operating state determination event among the multiple operating state determination events.

In one embodiment, the balancing execution module 508 is configured to:

if the balancing event corresponding to the balancing alignment point is triggered, determine the charge to be balanced for each cell according to the balanced charge calculation method under the operating states;

determine the time required for charge balancing of the charge to be balanced; the time required for charge balancing is the time for passive balancing current release;

perform passive charge balancing according to the time required for charge balancing.

In one embodiment, the balancing event is a small current full charge event under a full charge state, and the small current full charge event is triggered when the charging current value and the cell charge meet the small current full charge event condition; or, the balancing event is a low state of charge idle event under a low state of charge idle state. The low state of charge idle event is triggered when the cell idle time and the cell charge meet the low state of charge idle event condition. The balancing execution module 508 is configured to:

under the full charge state or the low state of charge idle state, obtain the state of charge for each cell and the minimum value of state of charge of the cells in the battery pack;

determine the difference in the state of charge between the state of charge and the minimum value of state of charge of the cells;

if the difference in the state of charge is not in range of the over-balanced state of charge, convert the difference in the state of charge into the charge to be balanced for each cell through the cell minimum discharge capacity of the battery pack; and

if the difference in the state of charge is in the range of the over-balanced state of charge, there is no charge to be balanced for each cell.

In one embodiment, the balancing event is the plateau region constant current charging event under the plateau region operating state. The plateau region constant current charging event is triggered when the relative change rate between the voltage and the cell charge, the stability of charging current and the charging current value meet the plateau region constant current charging condition.

Correspondingly, the balancing execution module 508 is configured to:

under the plateau region operating state, determine the battery pack charge when each cell meets the plateau region constant current charging condition, and the maximum battery pack charge when each cell meets the plateau region constant current charging condition;

determine the charge difference between the maximum battery pack charge and the battery pack charge;

if the charge difference is not in the over-balanced charge range, the charge difference is the charge to be balanced of each cell; and

if the charge difference is in the over-balanced charge range, there is no charge to be balanced for each cell.

In one embodiment, the balancing execution module 508 is configured to:
control the start/stop state of the charge balancing process according to the hardware design information and the balancing duty cycle; the start/stop state is a start state.

In one embodiment, the balancing execution module 508 is configured to:

if the time required for charge balancing is less than the duration in which the charge balancing process is in the start state each time, clear the time required for charge balancing to stop executing the next round of steps of the charge balancing method; the time required for charge balancing is obtained by executing the charge balancing strategy corresponding to the operating state;

if the operating state does not belong to the plateau region operating state, and a difference between the cell voltage of the battery pack and the minimum cell voltage is within the preset difference range, clear the time required for charge balancing to stop executing the next round of steps of the charge balancing method.

Each module in the above-mentioned charge balancing device can be implemented in whole or in part by software, hardware and combinations thereof. Each of the above modules may be embedded in or independent of the processor of the computer device in the form of hardware, or may be stored in the memory of the computer device in the form of software, so that the processor can call and execute the operations corresponding to the above modules.

In one embodiment, a computer device is provided. The computer device may be a terminal, and its internal structure diagram may be as shown in FIG. 6. The computer device comprises a processor, memory, input/output interface, communication interface, display unit and input device. The processor, memory and input/output interface are connected through the system bus, and the communication interface, display unit and input device are connected to the system bus through the input/output interface. The processor of the computer device is configured to provide computing and control capabilities. The memory of the computer device comprises non-volatile storage media and internal memory. The non-volatile storage medium stores the operating system and computer programs. The internal memory provides an environment for the execution of the operating system and computer programs in non-volatile storage media. The input/output interface of the computer device is configured to exchange information between the processor and external devices. The communication interface of the computer device is configured for wired or wireless communication with external terminals. The wireless mode can be implemented through WIFI, mobile cellular network, NFC (Near Field Communication) or other technologies. The computer program implements a charge balancing method when executed by the processor. The display unit of the computer device is configured to form a visually visible picture and can be a display screen, a projection device or a virtual reality imaging device. The display screen can be a liquid crystal display screen or an electronic ink display screen. The input device of the computer device can be a touch layer covered above display screen, or can also be buttons, trackballs or touch pads provided on the computer device shell, or can also be an external keyboard, touch pad or mouse, etc.

Those skilled in the art can understand that the structure shown in FIG. 6 is only a block diagram of a partial structure related to the solution of the present disclosure, and does not constitute a limitation on the computer device to which the solution of the present disclosure is applied. Specific computer device can may comprise more or fewer parts than shown, or combine certain parts, or have a different arrangement of parts.

In one embodiment, a computer device is also provided, comprising a memory and a processor. A computer program is stored in the memory. When the processor executes the computer program, it implements the steps in the above method embodiments.

In one embodiment, a computer-readable storage medium is provided, with a computer program stored thereon. When the computer program is executed by a processor, the steps in the above method embodiments are implemented.

In one embodiment, a computer program product is provided, comprising a computer program that implements the steps in each of the above method embodiments when executed by a processor.

It should be noted that the user information (comprising but not limited to user device information, user personal information, etc.) and data (comprising but not limited to data for analysis, stored data, displayed data, etc.) involved in this application are all information and data authorized by the user or fully authorized by all parties, and the collection, use and processing of relevant data need to comply with the relevant laws, regulations and standards of relevant countries and regions.

Those of ordinary skill in the art can understand that all or part of the processes in the methods of the above embodiments can be completed by instructing relevant hardware through a computer program. The computer program can be stored in a non-volatile computer-readable storage media. When executed, the computer program may comprise the processes of the above method embodiments. Any reference to memory, database or other media used in the embodiments provided in this application may comprise at least one of non-volatile and volatile memory. Non-volatile memory can comprise read-only memory (ROM), magnetic tape, floppy disk, flash memory, optical memory, high-density embedded non-volatile memory, resistive memory (ReRAM), Magnetoresistive Random Access Memory (MRAM), Ferroelectric Random Access Memory (FRAM), Phase Change Memory (PCM), graphene memory, etc. Volatile memory may comprise random access memory (RAM) or external cache memory, etc. As an illustration and not a limitation, RAM can be in various forms, such as static random access memory (SRAM) or dynamic random access memory (DRAM). The databases involved in the various embodiments provided in this application may comprise at least one of a relational database and a non-relational database. Non-relational databases may comprise blockchain-based distributed databases, etc., but are not limited thereto. The processor involved in the various embodiments provided in this application may be a general-purpose processor, a central processing unit, a graphics processor, a digital signal processor, a programmable logic device, a quantum computing-based data processing logic device, etc., and is not limited to this.

The technical features of the above embodiments can be combined in any way. To simplify the description, not all possible combinations of the technical features in the above embodiments are described. However, as long as there is no contradiction in the combination of these technical features, all possible combinations should be used. It is considered to be within the scope of the present disclosure.

The above-described embodiments only express several embodiments of the present disclosure, and their descriptions are relatively specific and detailed, but should not be construed as limiting the scope of the present disclosure. It should be noted that, for those of ordinary skill in the art, several modifications and improvements can be made without departing from the concept of the present disclosure, and these all fall within the protection scope of the present disclosure. Therefore, the scope of the present disclosure should be determined by the appended claims.

**Claims**

1. A charge balancing method, comprising:

   (S202) obtaining multiple operating state determination events in a first time period;
   (S204) determining a target operating state determination event among the multiple operating state determination events;
   (S206) determining a balancing alignment point of a second time period according to an operating state indicated by the target operating state determination event, wherein the first time period belongs to a time period prior to the second time period; and
   (S208) executing a charge balancing strategy corresponding to the operating state based on a trigger situation of a balancing event corresponding to the balancing alignment point,
   wherein the balancing alignment point is a parameter implemented by executing the charge balancing strategy, and the parameter is dynamically adjusted according to the operating state indicated by the target operating state determination event, so that corresponding parameter of a battery pack is capable of reaching the balancing alignment point in the second time period.

2. The method according to claim 1, wherein the multiple operating state determination events comprise a small current full charge event, a low state of charge idle event and a plateau region constant current charging event; wherein the small current full charge event, the low state of charge idle event and the plateau region constant current charging event are configured to determine the operating state, wherein the small current full charge event indicates a full charge state which is an operating state when the battery pack is about to be fully charged, the low state of charge idle event indicates a low state of charge idle state which is an operating state when the battery pack is idle for a long time and the battery charge is low, and the plateau region constant current charging event indicates a plateau region operating state where a relative change rate between voltage and charge of the battery pack reaches a change rate critical value during the battery pack is charging; and obtaining the multiple operating state determination events in the first time period comprises:

> determining the small current full charge event that occurs in the first time period based on a charging current value and a cell state of charge that meet a small current full charge event condition; and/or
> determining the low state of charge idle event that occurs in the first time period based on a cell idle duration and a cell state of charge that meet a low state of charge idle event condition; and/or,
> determining the plateau region constant current charging event that occurs in the first time period based on the relative change rate between a voltage and a cell charge, a stability of a charging current, and a charging current value that meet a plateau region constant current charging condition.

3. The method according to claim 2, wherein determining the plateau region constant current charging event that occurs in the first time period based on the relative change rate between the voltage and the cell charge, the stability of the charging current, and the charging current value that meet the plateau region constant current charging condition comprises:

> in response to that the stability of the charging current meets a constant current condition and the charging current value meets a current threshold condition, determining the relative change rate between the voltage and the cell charge; and
> in response to that the relative change rate reaches the change rate critical value in the first time period, determining the plateau region constant current charging event that occurs in the first time period based on the change rate critical value.

4. The method according to claim 2, wherein determining the balancing alignment point of the second time period according to the operating state indicated by the target operating state determination event comprises:

> in response to that the operating state is the full charge state indicated by the small current full charge event, determining the balancing alignment point to be a full value of the cell state of charge;
> in response to that the operating state is the low state of charge idle state indicated by the low state of charge idle event, determining the balancing alignment point to be an empty value of the cell state of charge; and
> in response to that the operating state is the plateau region operating state indicated by the plateau region constant current charging event, determining the balancing alignment point to be the relative change rate between the voltage and the cell charge, wherein the relative change rate reaches the change rate critical value in the first time period.

5. The method according to any one of claims 1 to 4, wherein determining the target operating state determination event among the multiple operating state determination events comprises:

> determining trigger counts of the multiple operating state determination events;
> obtaining a first target operating state determination event of which trigger count meets a number condition;
> in response to one first target operating state determination event being obtained, determining the first target operating state determination event to be the target operating state determination event among the multiple operating state determination events; and
> in response to multiple first target operating state determination events being obtained, determining a second target operating state determination event from the multiple first target operating state determination events with same trigger count according to priorities of the multiple operating state determination events, wherein the second target operating state determination event is the target operating state determination event among the multiple operating state determination events.

6. The method according to any one of claims 1 to 4, wherein executing the charge balancing strategy corresponding to the operating state based on the trigger situation of the balancing event corresponding to the balancing alignment point comprises:

> in response to the balancing event corresponding to the balancing alignment point being triggered, determining charge to be balanced for each cell according to a balancing charge calculation method under the operating state;
> determining time required for charge balancing of the charge to be balanced, wherein the time required for charge balancing is time for passive balancing current release; and
> executing passive charge balancing according to the time required for charge balancing.

7. The method according to claim 6, wherein the balancing event is a small current full charge event under a full charge state, and the small current full charge event is triggered in response to a charging current value and cell charge meeting a small current full charge event condition; or, the balancing event is a low state of charge idle event under a low state of charge idle state, and the low state of charge idle event is triggered in response to a cell idle duration and cell charge meeting a low state of charge idle event condition; and
wherein determining the charge to be balanced for each cell according to the balancing charge calculation method under the operating state comprises:

under the full charge state or the low state of charge idle state, obtaining a state of charge of each cell and a minimum value of state of charge of cells in the battery pack;
determining a difference in state of charge between the state of charge and the minimum value of state of charge of the cells;
in response to the difference in state of charge being not in a range of over-balanced state of charge, converting the difference in state of charge into the charge to be balanced for each cell through a minimum cell discharge capacity of the battery pack; and
in response to the difference in state of charge being in the range of over-balanced state of charge, there is no charge to be balanced for each cell.

8. The method according to claim 6, wherein the balancing event is a plateau region constant current charging event under a plateau region operating state, and the plateau region constant current charging event is triggered in response to a relative change rate between a voltage and cell charge, a stability of the charging current, and a charging current value meet a plateau region constant current charging condition; and
wherein determining the charge to be balanced for each cell according to the balancing charge calculation method under the operating state comprises:

under the plateau region operating state, determining battery pack charge when each cell meets the plateau region constant current charging condition, and a maximum battery pack charge when each cell meets the plateau region constant current charging condition;
determining a charge difference between the maximum battery pack charge and the battery pack charge;
in response to the charge difference being not in a range of over-balanced charge, the charge difference is the charge to be balanced for each cell; and
in response to the charge difference being in the range of over-balanced charge, there is no charge to be balanced for each cell.

9. The method according to any one of claims 1 to 8, further comprising:
controlling a start/stop state of the charge balancing process according to hardware design information and a balancing duty cycle, wherein the start/stop state is a start state.

10. The method according to any one of claims 1 to 9, further comprising:

in response to time required for charge balancing being less than a duration in which the charge balancing process is in a start state each time, clearing the time required for charge balancing to stop executing a next round of steps of the charge balancing method, wherein the time required for charge balancing is obtained by executing the charge balancing strategy corresponding to the operating state; and
in response to the operating state not belonging to a plateau region operating state, and a difference between a cell voltage of a battery pack and a minimum cell voltage is within a preset difference range, clearing the time required for charge balancing to stop executing the next round of steps of the charge balancing method.

11. The method according to any one of claims 2 to 4, wherein priorities of the small current full charge event, the low state of charge idle event and the plateau region constant current charging event decrease in order.

12. The method according to any one of claims 1 to 11, wherein start time and end time of the first time period is dynamically adjusted.

13. The method according to any one of claims 1 to 11, wherein a length of the first time period is determined based on data amount of the operating state determination events in the first time period.

14. A computer device, comprising a memory and a processor, wherein the memory stores a computer program, when the processor executes the computer program, the processor is configured to perform a method according to any one of claims 1 to 13.

15. A non-transitory computer-readable storage medium with a computer program stored thereon, wherein when the computer program is executed by a processor, the processor is configured to perform a method according to any one of claims 1 to 13.

Battery pack

↕

/102

Terminal

For example

Fig. 1

~ S202

Obtaining multiple operating state determination events in a first time period

↓ ~ S204

Determining a target operating state determination event among the multiple operating state determination events

↓ ~ S206

Determining the balancing alignment point of a second time period based on the operating state indicated by the target operating state determination event; the first time period belongs to the historical time period of the second time period

↓ ~ S208

Executing the charge balancing strategy corresponding to the operating state based on the trigger situation of the balancing event corresponding to the balancing alignment point

Fig. 2

Fig. 3

Fig. 4

502

Event acquisition module

504

Target event
determination module

506

Alignment point
determination module

508

Balancing execution
module

Fig. 5

Memory

Operating system

Computer program

Non-volatile storage medium

Processor

Internal memory

System bus

Input/output interface

Input device

Communication
port

Display unit

Computer device

Fig. 6

Europäisches Patentamt

European Patent Office

Office européen des brevets

# EUROPEAN SEARCH REPORT

**Application Number**

EP 24 19 5115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 085 309 A (SHANGHAI MAKESENS ENERGY STORAGE TECH CO LTD) 20 September 2022 (2022-09-20) | 1,14,15 | INV. H02J7/00 |
| Y | * abstract * | 2-4,6-10 | |
| A | * figures 1, 2, 4 * * paragraph [0010] - paragraph [0019] * * paragraph [0042] - paragraph [0052] * * paragraph [0053] * * paragraph [0059] - paragraph [0063] * * paragraph [0070] - paragraph [0072] * | 5,11-13 | |
| Y | CN 108 110 336 A (NINGDE CONTEMPORARY AMPEREX TECH CO LTD) 1 June 2018 (2018-06-01) * abstract * * figures 1, 2, 3, 4, 5, 6, 7 * * paragraph [0031] - paragraph [0125] * | 7 | |
| Y | CN 112 909 354 B (DONGGUAN AMPEREX TECH LTD) 8 July 2022 (2022-07-08) * abstract * * figures 2, 3, 4 * * paragraph [0059] - paragraph [0101] * | 2-4,6, 8-10 | |

**TECHNICAL FIELDS SEARCHED (IPC)**

H02J

The present search report has been drawn up for all claims

| Place of search | Date of completion of the search | Examiner |
|---|---|---|
| Munich | 29 November 2024 | Oiring, Vinicius |

## ANNEX TO THE EUROPEAN SEARCH REPORT
## ON EUROPEAN PATENT APPLICATION NO.

EP 24 19 5115

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | | Publication date | Patent family member(s) | Publication date |
|---|---|---|---|---|
| CN 115085309 | A | 20-09-2022 | NONE | |
| CN 108110336 | A | 01-06-2018 | NONE | |
| CN 112909354 | B | 08-07-2022 | NONE | |

EPO FORM P0459

For more details about this annex : see Official Journal of the European Patent Office, No. 12/82